# EUROPEAN PATENT SPECIFICATION

(11) **EP 3 124 455 B1**
(45) Date of publication and mention of the grant of the patent: **25.07.2018**
(21) Application number: 16182028.7
(22) Date of filing: 29.07.2016
(51) Int. Cl.: C04B 35/573, C04B 35/626, C04B 35/628, C04B 35/636, C04B 35/80, F16D 65/12

(54) **METHOD FOR THE PRODUCTION OF A FIBRE-REINFORCED CARBON-CERAMIC COMPOSITE MATERIAL**
VERFAHREN ZUR HERSTELLUNG EINES FASERVERSTÄRKTEN KOHLENSTOFF-KERAMIKMATERIAL-VERBUNDWERKSTOFFS
PROCÉDÉ DE PRODUCTION D'UN MATÉRIAU COMPOSITE DE CARBONE-CÉRAMIQUE RENFORCÉ PAR DES FIBRES

(30) Priority: 31.07.2015 IT UB20152748
(43) Date of publication of application: 01.02.2017
(73) Proprietor: Petroceramics S.p.A., 24040 Stezzano, Bergamo (IT)
(72) Inventor: VALLE, Massimiliano, I-24040 Stezzano, Bergamo (IT); DELLEDONNE, Lucia, I-24040 Stezzano, Bergamo (IT)
(74) Representative: Zanettin, Gianluigi

(56) References cited:
- WO-A1-2016/055975
- DE-A1- 19 820 832
- US-A1- 2002 142 146
- US-A1- 2003 003 286
- US-A1- 2013 284 558

## Description

### Field of application

The present invention relates to a method for the production of a composite, fibre-reinforced carbon-ceramic material.

This material has properties of chemical and thermal resistance, as well as a lightness which makes it particularly suitable for use in the industrial field, and in particular in the automotive and aeronautical industries, as a substitute for metal materials. The present invention thus also relates to a component of a disc brake made of such material, and in particular a brake disc.

### State of the art

The use of carbon-ceramic composite materials (CCM) is well-known in many applications where a high resistance to impact, compression and temperature generated by friction is required, characteristics which cannot be guaranteed by simple ceramic materials because of their inherent fragility.

In particular, carbon-ceramic composite materials (CCM) for applications in braking systems are known of, obtained by the interaction of silicon with a mixture comprising carbon fibres and additives at a temperature in which the silicon is in the molten state.

Generally, these composite carbon-ceramic materials are produced by mixing reinforcing fibres with an aggregating resin and other additives and placing the mixture thus obtained in a mould, where it is formed by heating and the application of pressure to obtain a shaped semi-finished product. The semi-finished product is then subjected to a first firing in a furnace at a temperature such as to bring about the carbonisation or pyrolysis of the resin. As a result of this firing, the semi-finished product acquires a certain porosity because of the loss of volatile material at the carbonisation or pyrolysis temperatures. Subsequently, the fired semi-finished product is subjected to a second firing in the presence of silicon at a temperature such as to cause the melting of the silicon and its infiltration in the pores of the aforesaid semi-finished product. The infiltration of the silicon increases the cohesion of the carbon fibres, while at the same time the molten silicon, in the conditions of the second firing, reacts in part with the carbon of the semi-finished product, forming silicon carbides which have the effect of improving the cohesion characteristics of the material.

The composite material prepared using the process described above is often used in the production of brake and clutch components for vehicles, in particular for disc brakes, thanks to its characteristics of good resistance to compression, at the temperature generated by friction and wear.

Generally, in the production of composite carbon-ceramic materials for the automotive or aeronautical industry a composition of epoxy resin or a phenolic resin comprising the following components is used as aggregating resin: epoxy or phenolic resin; a radical polymerisable monomer; a radical polymerisation initiator; and an amine-based hardening agent.

Such compositions of epoxy or phenolic resins are characterised by high viscosity and low fluidity at ambient temperature. This makes the hot forming of the mixture necessary as well as the subsequent heating step of the shaped semi-finished product (green body) to allow the polymerisation of the resin, this step being essential to give form and consistency to the semi-finished product. All these steps, together with the subsequent pyrolysis and carbonisation treatment, contribute to making the production process of carbon-ceramic materials extremely expensive due to the high energy absorption and the long processing cycles required for the polymerisation and pyrolysis of the material.

In the field of composite carbon-ceramic materials a need therefore exists to significantly reduce production costs, by intervening both on processing times and on energy consumption.

In the Japanese patent application no. 2006-265434 an epoxy resin based composition of low viscosity is proposed which permits improved productivity due to the rapid hardening characteristics already at a temperature of 100°C, compared to the 150°C of conventional resins. As hardening agents an aromatic polyamine and a Lewis complex are used with a base. The viscosity of this composition however remains high; in addition a heating step of the resin is still required. The energy costs of the process thus remain high for obtaining a final material having unsatisfactory properties in terms of mechanical strength and thermal resistance.

In the patent application US 8883938 a method is proposed for producing a fibre-reinforced composite material having good mechanical properties starting from a composition having excellent fluidity already at a temperature of 100°C. The essential components of such composition are an epoxy resin, a radical polymerisable monomer containing an acid group, a radical polymerisation initiator and an amine-based hardening agent. The production method uses a vacuum resin transfer moulding (RTM) process, with different pressures in the cavity and outside. Nevertheless, the method has a high energy consumption related to the pre-heating of the green body and the subsequent pyrolysis. Moreover, this method does not allow control of the orientation of the reinforcing fibres or much freedom in the structuring of the final material.

Patent application No. DE19820832A1 discloses a production of a solid body, which comprises using a raw material containing one or more additives selected from monosaccharides, oligosaccharides and polysaccharides in a molding process followed by a solidification process above the decomposition temperature of the saccharides added.

Patent application No. WO2016/055975A1 discloses a method for making brake discs in material fibre-reinforced materials. In particular, it teaches to use cellulose in mixture with an organic resin (phenolic resin) as binder.

### Presentation of the invention

Consequently, the purpose of the present invention is to eliminate, or at least reduce, the aforementioned problems relative to the prior art, by providing a production method of a composite, fibre-reinforced carbon-ceramic material which permits increased productivity in terms of energy saving and production times, obtaining a final composite carbon-ceramic material having comparable properties to the materials made using conventional methods.

Such drawbacks are resolved by a production method of a composite, fibre-reinforced carbon-ceramic material according to claim 1.

According to a general form of implementation of the invention, the method for the production of a composite, fibre-reinforced carbon-ceramic material (CCM) comprises at least the following operating steps:
a) preparing a mixture comprising at least reinforcing fibres and an organic agglomerating binder;
b) forming the mixture to obtain a semi-finished product;
c) immediately after the forming step (b), without any intermediated thermal treatment, infiltrating the semi-finished product with molten silicon, subjecting the semi-finished product to a firing in the presence of silicon at a temperature such as substantially to bring about the fusion of said silicon and its infiltration into said semi-finished product thus obtaining a composite, fibre-reinforced carbon-ceramic material (CCM).

The aforesaid organic agglomerating binder, essential for the forming of such material, is present between 15% and 25% by weight of said mixture, consists only of cellulose, methyl cellulose or a mixture of cellulose and methyl cellulose and is added to the mixture together with water.

The forming step is conducted at a temperature not exceeding 100°C.

Preferably, said forming step may be conducted for a period of time not exceeding 10 minutes, and preferably between 5 and 10 minutes.

Advantageously, the forming step is conducted by exerting a pressure of between 1.961 and 9.806 MPa (20 and 100 kg / cm²) on the mixture inside the mould.

Preferably, the aforesaid organic agglomerating binder is added to the mixture in powder form.

Advantageously, the water is added to the mixture in a nebulised form.

The aforesaid organic agglomerating binder additive consists only of cellulose, methyl cellulose or a mixture of cellulose and methyl cellulose.

In particular, the aforesaid mixture comprises:
- between 35% and 50% by weight of reinforcing fibres;
- between 15% and 25% by weight of cellulose, methylcellulose or a mixture of cellulose and methylcellulose;
- at least 20% by weight of fillers; and
- up to 10% by weight of water.

Advantageously, the step b) is conducted at a temperature not exceeding 50°C, preferably at ambient temperature.

Alternatively, the forming step b) can be conducted at a temperature between 50°C and 100°C to give greater consistency to the semi-finished product.

The step c) of infiltration with molten silicon is conducted immediately after the forming step b), without intermediate thermal treatments.

Preferably, the said mixture comprises at least 20% by weight of powder fillers, selected from the group consisting of coke, silicon carbide, graphite or a mixture thereof.

Advantageously, the mixture may comprise up to 5% by weight of a component selected from the group consisting of: boron nitride; silicon nitride; kaolin; clay; or metals, such as titanium, chromium, iron, aluminium; or a mixture thereof. One or more of these components are added to the mixture in powder form.

The technical characteristics of the invention can be seen clearly from the contents of the following claims and the advantages of the same will be more clearly comprehensible from the detailed description below,

### Detailed description

The method according to the present invention makes it possible to produces a composite fibre-reinforced carbon-ceramic material with properties of chemical and thermal resistance, as well as a lightness which makes it particularly suitable for use in the industrial field, and in particular in the automotive and aeronautical industries, as a substitute for metal materials.

According to a general form of implementation of the invention, the method for the production of a composite, fibre-reinforced carbon-ceramic material comprises at least the following operating steps:
a) preparing a mixture comprising at least reinforcing fibres and an organic agglomerating binder;
b) forming the mixture to obtain a semi-finished product;
c) immediately after the forming step (b), without any intermediated thermal treatment, infiltrating the semi-finished product with molten silicon, subjecting the semi-finished product to a firing in the presence of silicon at a temperature such as substantially to bring about the fusion of said silicon and its infiltration into said semi-finished product thus obtaining a composite, fibre-reinforced carbon-ceramic material,

The forming of the mixture may be carried out using a mould or by using a sheet-forming process, in particular with winding of the mixture in the form of a sheet around a mandrel.

The aforesaid organic agglomerating binder, essential for the forming of such material, is present between 15% and 25% by weight of said mixture, consists only of cellulose, methyl cellulose or a mixture of cellulose and methyl cellulose and is added to the mixture together with water.

As described further below, the present invention is based on having surprisingly found that the use of cellulose, methylcellulose or a mixture of such two compounds as the organic agglomerating binder in place of conventional binding resins (in particular phenolic) makes it possible to:
- significantly lower the temperature at which the forming step of the mixture can be performed;
- significantly reduce the length of the forming step;
- eliminate the step of pyrolysis.

All this leads to a reduction of production costs, in terms of process time, energy costs and simplification of the process and of the production plants.

According to the aforesaid general form of implementation of the invention, the aforesaid forming step is conducted at a temperature not exceeding 100°C.

In other words, taking into account the significant reduction of the temperature of the forming step compared to conventional production methods of composite, fibre-reinforced, carbon-ceramic materials (CCM), it can be stated -qualitatively- that the method according to the present invention permits a "substantially cold" forming (or moulding) to be carried out, "substantially cold" meaning a process conducted at temperatures not far from ambient temperature or (in relative terms) significantly lower than the conventionally required temperatures. For the forming step in fact, one passes from a temperature not less than 150°C to a temperature of not more than 100°C.

Advantageously, as described further below, the forming step can be conducted even at a temperature lower than 50°C, and in particular at ambient temperature. "Ambient temperature" means a temperature around 25°C.

As described further below, the temperature at which the forming step can be conducted depends on the composition of the organic agglomerating binder, and in particular on the use or not of an organic binder resin. In the case where only cellulose, methylcellulose or a mixture of two such compounds is used as the organic agglomerating binder it is possible to perform the forming step at temperatures below 50°C.

Preferably, said forming step may be conducted for a period of time not exceeding 10 minutes, and preferably between 5 and 10 minutes, obtaining a semi-finished product of a good consistency which can be handled directly without loss in terms of shape or size. For the forming step in fact, one passes from process times of not less than 45 minutes to process times of not more than 10 minutes.

The method according to the invention thus makes it possible to significantly reduce not only the forming temperature, but also the process times.

Advantageously, the forming step is conducted by exerting a pressure of between 1.961 and 9.806 MPa (20 and 100 kg / cm²) on the mixture inside the mould.

Preferably, the aforesaid organic agglomerating binder (in the absence of an organic resin binder) is added to the mixture in powder form. This allows a better distribution of the agglomerating binder in the mixture and a quicker fluidification of the mixture.

Advantageously, the water is added to the mixture in a nebulised form. This makes it possible to speed up the interaction between the agglomerating binder and the water, and in particular between the cellulose, methylcellulose or a mixture of such two compounds and the water, so as to favour the distribution of the agglomerating binder in the mixture and the fluidification of said mixture.

Operatively, the water essentially performs the function of favouring the mixture of the powders, and in particular of the cellulose, methylcellulose or mixture thereof with the other components.

Advantageously, as a reinforcing fibre, filaments composed substantially of carbon are used. The expression "filaments composed substantially of carbon" is intended to include, in particular, fibrous materials obtained by pyrolysis of various products of synthetic origin, for example, polyacrylonitrile (PAN) and polisilazane, or of natural origin, for example, tars, cellulose-based natural sources such as vegetable fibres and wood.

The reinforcing fibres may be previously coated with a protective resin, preferably polyurethane, before being used in the method according to the invention.

Alternatively, the reinforcing fibres may be previously coated with the same organic agglomerating binder used for the preparation of the mixture. This way a greater cohesion of the material and a more compact product is obtained.

The aforesaid organic agglomerating binder additive consists only of cellulose, methyl cellulose or a mixture of cellulose and methyl cellulose. In other words, the mixture does not contain an organic binder resin, and in particular does not contain phenolic resin.

In particular, the aforesaid mixture comprises:
- between 35% and 50% by weight of reinforcing fibres;
- between 15% and 25% by weight of cellulose, methylcellulose or a mixture of cellulose and methylcellulose;
- at least 20% by weight of fillers; and
- up to 10% by weight of water.

Preferably, the mixture comprises at least 20% by weight of powder fillers, selected from the group consisting of coke, silicon carbide, graphite or a mixture thereof.

Advantageously, the step b) is conducted at a temperature not exceeding 50°C, preferably at ambient temperature.

Alternatively, in order to give greater consistency to the semi-finished product, the forming step can be conducted at a temperature between 50°C and 100°C.

The infiltration step c) with molten silicon is conducted immediately after the forming step b), without intermediate thermal treatments. In particular, the production method does not comprise an intermediate stage of pyrolysis and the semi-finished product obtained at the end of the forming step b) is directly subjected to infiltration with silicon.

From experimental tests carried out, it has been seen that the semi-finished product obtained at the end of the forming step b) has a good consistency and density of the order of 1.0-1.1 g/cm³. The semi-finished product can be easily handled without any particular risk of fractures and can be transferred directly from the mould into the furnace for infiltration.

In particular, the production method has been tested with a mixture having the following composition: 40% fibre, 34% of coke in powder of different particle sizes, 20% of methyl cellulose powder, 10% water, 6% of additives. Carbon fibres are used as fibre. The powder components were mixed with each other gradually; to this powder mixture the fibres and the water in nebulised form were added. The mixture thus obtained was uniaxially pressed in a mould at a pressure of about 6.668 MPa (68 kg/cm²) at a temperature of 25°C for 10 minutes. The semi-finished product obtained at the end of the forming step showed good consistency such as to allow its manipulation without loss of form and size and had a density of the order of 1.0-1.1 g/cm³. The composite carbon-ceramic material obtained at the end of the infiltration step (conducted directly on the semi-finished product obtained from the forming step without intermediate pyrolysis) presented good characteristics of mechanical resistance.

Advantageously, the mixture may comprise a component selected from the group consisting of: boron nitride; silicon nitride; kaolin; clay; or metals, such as titanium, chromium, iron, aluminium; or a mixture thereof.

Such one or more components are added in said mixture in powder form. Preferably, such one or more components are present in the mixture in an amount not exceeding 5% by weight. The introduction in the mixture of such components makes it possible to increase the density of the semi-finished product obtained at the end of the forming step b) and to reduce the infiltration of silicon in the semi-finished product, with consequent protection of the carbon fibres from the reaction with the silicon.

The invention permits several advantages to be achieved, in part already described.

The production method of a composite, fibre-reinforced carbon-ceramic material according to the present invention permits increased productivity in terms of energy saving and production times, obtaining a final composite carbon-ceramic material having comparable properties to the materials obtained with conventional methods.

Thanks to the invention, the forming step can be carried out in very short times and at temperatures not exceeding 100°C. Advantageously, it is also possible to perform the forming step at a temperature below 50°C, even operating at ambient temperature. This way the forming (or moulding) time is significantly shorter, reducing machine times with a consequent increase in production.

It should be noted in particular that, it being no longer necessary to heat the mould to a temperature of 150°C, the waiting times required for the cooling of the mould before it can be handled are also reduced.

It is also possible to obtain the composite carbon-ceramic material without subjecting the semi-finished product obtained in the forming step to pyrolysis. In this case, the moulded semi-finished product can pass directly to the infiltration step with silicon. This entails a further reduction in costs and production times.

The invention thus conceived thereby achieves the intended objectives.

Obviously, its practical embodiments may assume forms and configurations different from those described while remaining within the scope of protection of the invention defined by the claims.

Moreover, all the details can be replaced by technically equivalent elements and the dimensions, forms and materials used may be any as needed.

## Claims

1. Method for the production of a composite, fibre-reinforced carbon-ceramic material comprising at least the following operating steps:
a) preparing a mixture comprising at least reinforcing fibres and an organic agglomerating binder;
b) forming the mixture to obtain a semi-finished product;
c) infiltrating the semi-finished product with molten silicon, subjecting the semi-finished product to a firing in the presence of silicon at a temperature such as substantially to bring about the fusion of said silicon and its infiltration into said semi-finished product thus obtaining a composite, fibre-reinforced carbon-ceramic material,
**characterised in that** said organic agglomerating binder, essential for the forming of such material, is present between 15% and 25% by weight of said mixture and comprises cellulose, methyl cellulose or a mixture of cellulose and methyl cellulose and is added to said mixture together with water and **in that** said forming step is conducted at a temperature not exceeding 100 °C, wherein said organic agglomerating binder additive consists only of cellulose, methyl cellulose or a mixture of cellulose and methyl cellulose and wherein said step c) of infiltration with molten silicon is conducted immediately after the forming step b), without intermediate thermal treatments.

2. Method according to claim 1, wherein said forming step is conducted for a period of time not exceeding 10 minutes, and preferably between 5 and 10 minutes.

3. Method according to claim 1 or 2, wherein said forming step is conducted by exerting on the mixture a pressure between 1.961 and 9.806 MPa (20 and 100 kg/cm²).

4. Method according to claim 1, 2 or 3, wherein said organic agglomerating binder is added to the mixture in powder form.

5. Method according to one or more of the claims from 1 to 4, wherein the water is added to said mixture in nebulised form.

6. Method according to one or more of the preceding claims, wherein said mixture comprises between 35% and 50% by weight of reinforcing fibres, between 15% and 25% by weight of cellulose, methyl cellulose or a mixture of cellulose and methyl cellulose, at least 20% by weight of fillers and up to 10% by weight of water.

7. Method according to one or more of the preceding claims, wherein said forming step b) is conducted at a temperature not exceeding 50 °C, preferably at ambient temperature.

8. Method according to one or more of the preceding claims, wherein said forming step b) is conducted at a temperature between 50 °C and 100 °C to give said semi-finished product greater consistency.

9. Method according to one or more of the preceding claims, wherein said mixture comprises at least 20% by weight of powder fillers, selected from the group consisting of coke, silicon carbide, graphite or a mixture thereof.

10. Method according to one or more of the preceding claims, wherein said mixture comprises up to 5% by weight of a component selected from the group consisting of boron nitride, silicon nitride, kaolin, clay, or metals, such as titanium, chromium, iron, aluminium, or a mixture thereof, added to said mixture in powder form.

## Patentansprüche

1. Verfahren zur Herstellung eines faserverstärkten Kohlenstoff-Keramik-Kompositmaterials, umfassend zumindest die folgenden Arbeitsschritte:
a) Herstellen einer Mischung, umfassend zumindest Verstärkungsfasern und ein organisches agglomerierendes Bindemittel;
b) Bilden der Mischung, um ein Halbzeug zu erhalten;
c) Infiltrieren des Halbzeugs mit geschmolzenem Silicium, Unterziehen des Halbzeugs einem Brennen in der Gegenwart von Silicium bei einer Temperatur, bei der das Schmelzen des Siliciums und seine Infiltration in das Halbzeug im Wesentlichen herbeigeführt wird, wodurch ein faserverstärktes Kohlenstoff-Keramik-Verbundmaterial erhalten wird,
**dadurch gekennzeichnet, dass** das organische agglomerierende Bindemittel, das für die Bildung eines solchen Materials wesentlich ist, zwischen 15 und 25 Gew.-% der Mischung beträgt und Cellulose, Methylcellulose oder eine Mischung aus Cellulose und Methylcellulose umfasst und zu der Mischung zusammen mit Wasser zugesetzt wird, und dadurch, dass der Bildungsschritt bei einer Temperatur durchgeführt wird, die 100ºC nicht übersteigt, wobei das organische agglomerierende Bindemitteladditiv nur aus Cellulose, Methylcellulose oder einer Mischung aus Cellulose und Methylcellulose besteht, und wobei der Schritt c) der Infiltration mit geschmolzenem Silicium unmittelbar nach dem Bildungsschritt b) ohne zwischenzeitliche thermische Behandlungen durchgeführt wird.

2. Verfahren nach Anspruch 1, wobei der Bildungsschritt für einen Zeitraum, der 10 Minuten nicht überschreitet, und vorzugsweise zwischen 5 und 10 Minuten durchgeführt wird.

3. Verfahren nach Anspruch 1 oder 2, wobei der Bildungsschritt durchgeführt wird, indem auf die Mischung ein Druck zwischen 1,961 und 9,806 MPa (20 und 100 kg/cm²) ausgeübt wird.

4. Verfahren nach Anspruch 1, 2 oder 3, wobei das organische agglomerierende Bindemittel der Mischung in Pulverform zugesetzt wird.

5. Verfahren nach einem oder mehreren der Ansprüche 1 bis 4, wobei das Wasser der Mischung in zerstäubter Form zugesetzt wird.

6. Verfahren nach einem oder mehreren der vorhergehenden Ansprüche, wobei die Mischung zwischen 35 und 50 Gew.-% Verstärkungsfasern, zwischen 15 und 25 Gew.-% Cellulose, Methylcellulose oder eine Mischung aus Cellulose und Methylcellulose, zumindest 20 Gew.-% Füllstoffe und bis zu 10 Gew .-% Wasser enthält.

7. Verfahren nach einem oder mehreren der vorhergehenden Ansprüche, wobei der Bildungsschritt b) bei einer Temperatur, die 50ºC nicht überschreitet, vorzugsweise bei Umgebungstemperatur durchgeführt wird.

8. Verfahren nach einem oder mehreren der vorhergehenden Ansprüche, wobei der Bildungsschritt b) bei einer Temperatur zwischen 50°C und 100°C durchgeführt wird, um dem Halbzeug eine größere Konsistenz zu verleihen.

9. Verfahren nach einem oder mehreren der vorhergehenden Ansprüche, wobei die Mischung zumindest 20 Gew.-% Pulverfüllstoffe enthält, ausgewählt aus der Gruppe bestehend aus Koks, Siliciumcarbid, Graphit oder einer Mischung daraus.

10. Verfahren nach einem oder mehreren der vorhergehenden Ansprüche, wobei die Mischung bis zu 5 Gew.-% einer Komponente umfasst, die ausgewählt ist aus der Gruppe bestehend aus Bornitrid, Siliziumnitrid, Kaolin, Ton oder Metallen wie Titan, Chrom, Eisen, Aluminium oder einer Mischung daraus, die der Mischung in Pulverform zugesetzt wird.

## Revendications

1. Procédé pour la production d'un matériau composite carbone-céramique renforcé par fibres comprenant au moins les étapes opérationnelles suivantes :
a) la préparation d'un mélange comprenant au moins des fibres de renforcement et un liant agglomérant organique ;
b) la formation du mélange pour obtenir un produit semi-fini ;
c) l'infiltration du produit semi-fini avec du silicium fondu, la soumission du produit semi-fini à une cuisson en présence de silicium à une température permettant sensiblement d'entraîner la fusion dudit silicium et son infiltration dans ledit produit semi-fini, de sorte à obtenir un matériau composite carbone-céramique renforcé par fibres,
**caractérisé en ce que** ledit liant agglomérant organique, essentiel pour la formation d'un tel matériau, est présent entre 15 % et 25 % en poids dudit mélange et comprend de la cellulose, de la méthylcellulose ou un mélange de cellulose et de méthylcellulose et est ajouté audit mélange conjointement avec de l'eau et **en ce que** ladite étape de formation est réalisée à une température n'excédant pas 100 °C, dans lequel ledit additif de liant agglomérant organique est constitué seulement de cellulose, de méthylcellulose ou d'un mélange de cellulose et de méthylcellulose et dans lequel ladite étape c) de l'infiltration avec du silicium fondu est réalisée immédiatement après l'étape de formation b), sans traitements thermiques intermédiaires.

2. Procédé selon la revendication 1, dans lequel ladite étape de formation est réalisée pendant une période n'excédant pas 10 minutes, et de préférence entre 5 et 10 minutes.

3. Procédé selon la revendication 1 ou 2, dans lequel ladite étape de formation est réalisée en exerçant, sur le mélange, une pression entre 1,961 et 9,806 MPa (20 et 100 kg/cm²).

4. Procédé selon la revendication 1, 2 ou 3, dans lequel ledit liant agglomérant organique est ajouté au mélange sous forme de poudre.

5. Procédé selon une ou plusieurs des revendications 1 à 4, dans lequel l'eau est ajoutée audit mélange sous forme nébulisée.

6. Procédé selon une ou plusieurs des revendications précédentes, dans lequel ledit mélange comprend entre 35 % et 50 % en poids de fibres de renforcement, entre 15 % et 25 % en poids de cellulose, de méthylcellulose ou d'un mélange de cellulose et de méthylcellulose, au moins 20 % en poids de charges et jusqu'à 10 % en poids d'eau.

7. Procédé selon une ou plusieurs des revendications précédentes, dans lequel ladite étape de formation b) est réalisée à une température n'excédant pas 50 °C, de préférence à température ambiante.

8. Procédé selon une ou plusieurs des revendications précédentes, dans lequel ladite étape de formation b) est réalisée à une température entre 50 °C et 100 °C pour donner audit produit semi-fini une meilleure consistance.

9. Procédé selon une ou plusieurs des revendications précédentes, dans lequel ledit mélange comprend au moins 20 % en poids de charges en poudre, sélectionnées parmi le groupe constitué de coke, de carbure de silicium, de graphite ou d'un mélange de ceux-ci.

10. Procédé selon une ou plusieurs des revendications précédentes, dans lequel ledit mélange comprend jusqu'à 5 % en poids d'un component sélectionné parmi le groupe constitué de nitrure de bore, de nitrure de silicium, de kaolin, d'argile, ou de métaux, tels que du titane, du chrome, du fer, de l'aluminium, ou d'un mélange de ceux-ci, ajouté audit mélange sous forme de poudre.
